# EUROPÄISCHE PATENTSCHRIFT

(11) **EP 2 160 908 B1**
(45) Veröffentlichungstag und Bekanntmachung des Hinweises auf die Patenterteilung: **07.03.2018**
(21) Anmeldenummer: 08758477.7
(22) Anmeldetag: 13.05.2008
(51) Int. Cl.: H04W 24/06, H04L 12/26, H04L 12/24, H04W 88/02

(54) **VERFAHREN ZUM TESTEN EINES MOBILFUNKGERÄTS**
METHOD FOR TESTING A MOBILE RADIO DEVICE
PROCÉDÉ DE TEST D'UN APPAREIL DE TÉLÉPHONIE MOBILE

(30) Priorität: 27.06.2007 DE 102007029717; 21.02.2008 DE 102008010299
(43) Veröffentlichungstag der Anmeldung: 10.03.2010
(73) Patentinhaber: Rohde & Schwarz GmbH & Co. KG, 81671 München (DE)
(72) Erfinder: HUBER, Rolf, 82256 Fürstenfeldbruck (DE); GÖTZ, Reiner, 85540 Haar (DE)
(74) Vertreter: Beder, Jens
(86) Internationale Anmeldenummer: PCT/EP2008/003813
(87) Internationale Veröffentlichungsnummer: WO 2009/000366

(56) Entgegenhaltungen:
- ANRITSU CORPORATION: "Product Introduction MT8510B Service Tester" INTERNET CITATION, [Online] 1. Juni 2005 (2005-06-01), Seiten 1-12, XP007906076 Gefunden im Internet: URL:http://www.eu.anritsu.com/files/MT8510 B_EI1200.pdf> [gefunden am 2008-10-27]
- REINER GÖTZ: "R&S TM CRTU Protocol Test Platform User-friendly definition of 2G and 3G signaling scenarios" INTERNET CITATION, [Online] Bd. 193, 25. Juni 2007 (2007-06-25), Seiten 21-23, XP007905988 Gefunden im Internet: URL:http://www.rsoe.com/www/dev_center.nsf /frameset?OpenAgent&website=com&navig=/www /dev_center.nsf/html/nav,10,17&content=htt p://www.rsoe.com/www/publicat.nsf/article/ n193_CRTU> [gefunden am 2008-10-15]
- ANRITSU CORPORATION: "ME7876A Mobile Communication Test System" INTERNET CITATION, [Online] 1. Januar 2006 (2006-01-01), Seiten 1-20, XP007906074 Gefunden im Internet: URL:http://www.eu.anritsu.com/files/ME7876 A_E1300.pdf> [gefunden am 2008-10-27]
- ANRITSU CORPORATION: "MD8470A SIGNALLING TESTER" INTERNET CITATION, [Online] April 2005 (2005-04), Seiten 1-12, XP002354122 Gefunden im Internet: URL:http://www.anritsu.de/files/MD8470A_E1 200.pdf> [gefunden am 2005-11-14]

## Beschreibung

Die Erfindung betrifft ein Verfahren zum Testen eines Mobilfunkgeräts.

Aus dem Stand der Technik sind Verfahren bekannt, mit denen man Mobilfunkgeräte testen kann, indem man die Mobilfunkdaten der Mobilfunknetze unter Realbedingung, in einem sogenannten Feldtest misst und aufzeichnet. Es wird die Interoperabilität, das Zusammenspiel zwischen Mobilfunkgerät und den Basisstationen eines oder mehrerer Funknetze in einem gemieteten Testnetz oder im realen Feld getestet. Die aufgezeichneten Daten der Sende- und Antwortsignale der Basisstationen und des Mobilfunkgeräts, werden in eine Befehlssprache zum Ansteuern eines Signalgenerators als Testgerät umgewandelt. In einer Testumgebung wird mithilfe einer Simulationsvorrichtung, dem Signalgenerator, die die Befehlsfolgen der Befehlssprache wieder in Funksignale umwandelt, ein Mobilfunknetz simuliert. Mit dieser Befehlssprache können neue Szenarien in einer Laborumgebung entwickelt werden.

Es wird getestet, ob das Mobilfunkgerät erwartungsgemäß nach dem Mobilfunkstandard auf die Sendesignale der simulierten Basisstationen reagiert. Nachteilig am Stand der Technik ist, dass man nur genau das Mobilfunkgerät in der Simulation testen kann, welches zur Ermittlung des Testszenarios in einem realen Mobilfunknetz zum Aufzeichnen der Signale zwischen der Basisstation und dem Mobilfunkgerät verwendet wurde.

Sendet ein anderes Modell nicht exakt die gleichen Antwortsignale an die simulierten Basisstationen, wie das z. B. bei einer Testfahrt zum Protokollieren der Signale und Antwortsignale verwendete Mobilfunkgerät, gibt es Abweichungen von den gemäß Protokoll erwarteten Signalen, und es kann nicht unterschieden werden, ob das getestete Mobilfunkgerät tatsächlich entgegen dem Mobilfunkstandard fehlerhaft reagiert, oder ob die Abweichung nur dem Typ des Mobilfunkgeräts entspricht, jedoch eine hinsichtlich des verwendeten Mobilfunkstandards zulässige Abweichung ist. Zum Beispiel kann es sein, dass die Reihenfolge der Antwortsignale beim Mobilfunkgerät X eine andere ist als beim Mobilfunkgerät Y und sich trotzdem beide Mobilfunkgeräte X und y gemäß dem Mobilfunkstandard richtig verhalten, d.h. auf Signale der Basisstationen mit konventionsgemäßen Antwortsignalen reagieren. Das Dokument ANRITSU CORPORATION: "Product Introduction MT8510B Service Tester", 1. Juni 2005, offenbart einen Service Tester für den Test eines Mobilfunkgeräts. Der Service Tester simuliert bei einem Protokolltest das Verhalten einer Basisstation beim Gesprächsaufbau und Gesprächsabbau mit dem zu testenden Mobilfunkgerät. Darüber hinaus führt der Service Tester eine Reihe von Funktionstests des Mobilfunkgeräts durch. Die Resultate (Pass/Fail) der Einzeltests werden protokolliert. Der Teststatus des Mobilfunkgeräts ist positiv , wenn alle Einzeltests erfolgreich durchgeführt worden sind.

Das Dokument REINER GÖTZ: "R&S TM CRTU Protocol Test Platform User-friendly definition of 2G and 3G signaling scenarios", INTERNET CITATION, Bd. 193 25. Juni 2007, offenbart einen Protokolltester, bei dem Testszenarien vom Anwender interaktiv und graphisch eingestellt werden können.

Die Aufgabe ist, ein Verfahren zu entwickeln, das Mobilfunkgeräte unterschiedlicher Art testen kann, die in Ihren Antwortsignalen voneinander abweichen können. Die Aufgabe wird in vorteilhafter Weise durch ein Verfahren nach Anspruch 1 gelöst.

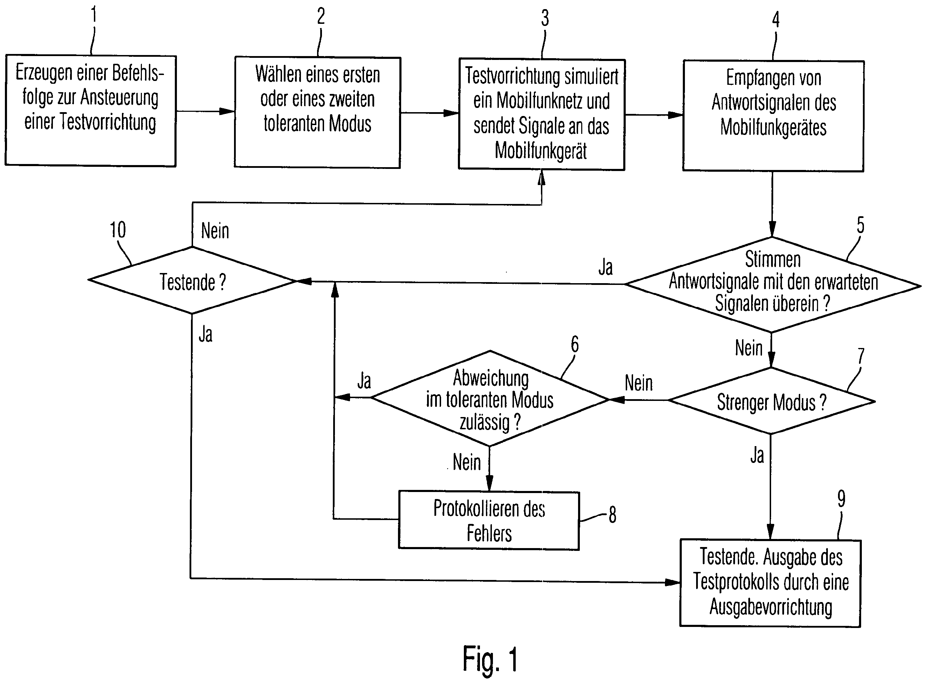

In den Unteransprüchen sind vorteilhafte Weiterbildungen des erfindungsgemäßen Verfahrens ausgeführt.
Eine bevorzugte Ausführungsform der Erfindung wird anhand der Zeichnung in der nachfolgenden Beschreibung näher erläutert. Es zeigen:
- Fig. 1: das erfindungsgemäße Verfahren nach Anspruch 1,
- Fig. 2: eine anschauliche Abbildung der gesamten Durchführung eines Mobilfunktests und eine darin enthaltene Anwendung des erfindungsgemäßen Verfahrens,
- Fig. 3: eine graphische Benutzeroberfläche für das Konfigurieren der Tests, insbesondere für das Einstellen des strengen oder toleranten Modus, und für das Editieren der Befehlsfolgen.
Im Folgenden wird anhand der Figur 1 das erfindungsgemäße Verfahren zum toleranten Testen eines Mobilfunkgeräts nach Anspruch 1 mit allen Unteransprüchen ausführlich beschrieben. Ein Mobilfunkgerät soll mit einer Testvorrichtung getestet werden. Die Testvorrichtung ist vorzugsweise ein Protokolltester mit einem Signalgenerator, der ein Mobilfunknetzwerk simuliert. Um das Mobilfunknetzwerk zu simulieren, benötigt der Protokolltester eine Befehlsfolge, die ihn so ansteuert, dass durch den Signalgenerator Signalisierungsnachrichten erzeugt und gesendet werden, die einen Verbindungsaufbau zu dem zu testenden Mobilfunkgerät (DUT) ermöglichen. In einem ersten Schritt erzeugt eine Vorrichtung diese Befehlsfolge. Diese Befehlsfolge kann aus Messdaten gewonnen, oder sie kann programmiert worden sein. Gleichzeitig werden erwartete Antwortsignale erzeugt. Diese werden besonders einfach durch Protokollieren einer realen Netzsituation mittels eines präparierten Mobilfunkgeräts genommen. Als Testmobilfunkgerät oder präpariertes Mobilfunkgerät wird im Zusammenhang mit der vorliegenden Erfindung jedes Mobilfunkgerät verstanden, welches Informationen über Nachrichten, die im Betrieb über die Funkschnittstelle zur Basisstation übertragen oder von dieser empfangen werden, über eine weitere Schnittstelle ausgeben kann.

In einem zweiten Schritt wird ein Modus ausgewählt, nach dem die Abweichungen der vom zu testenden Mobilfunkgerät empfangenen Antwortsignale mit den erwarteten Antwortsignalen verglichen werden: Auch wenn Mobilfunkgeräte unterschiedlichster Modelle sich alle konform einem Mobilfunkstandard verhalten, können ihre Antwortsignale voneinander abweichen. Beispielsweise kann die Reihenfolge der Antwortsignale, die ein Mobilfunkgerät vom Typ X sendet, eine andere sein als die, welche ein Mobilfunkgerät vom Typ Y sendet. Solche Abweichungen können zulässig sein, solange die Anforderungen an Reihenfolge und Inhalt, die der jeweilige Mobilfunkstandard definiert, eingehalten werden. Nun gibt es zwei Modi, auf die das Mobilfunkgerät getestet werden kann: Ein sogenannter strenger Modus lässt keinerlei Abweichung der Antwortsignale zu. Der Test wird abgebrochen, sobald ein Antwortsignal sich von dem erwarteten Antwortsignal unterscheidet. Die Antwortsignale müssen nach Inhalt und Reihenfolge mit der Abfolge der erwarteten Antwortsignale übereinstimmen.

Im ersten, sogenannten toleranten Modus sind bestimmte Abweichungen zulässig, solange sie dem Mobilfunkstandard, vorzugweise GSM oder UMTS, nach korrekt sind. Zulässige Abweichungen sind vorzugsweise durch Parameterbereiche und/oder durch Nachrichteninhalte festgelegt. Zulässig sind Antwortsignale, welche die Basisstationen gemäß dem Mobilfunkstandard richtig interpretieren können. In der Testvorrichtung ist eine Datenbank abgespeichert, die die zulässigen Antwortsignale und Informationen hinsichtlich Inhalt und Reihenfolge enthält. Dadurch wird ein Vergleich der tatsächlich vom DUT erzeugten Antwortsignale mit dem Mobilfunkstandard ermöglicht und zulässige Abweichungen können als solche erkannt werden. Beispielsweise darf das Mobilfunkgerät auf eine Sendesequenz der Basisstationen mit drei verschiedenen zulässigen Sequenzen von Signalen antworten: A-B-C-D, B-A-D-C, C-B-D-A.

Das sind z. B. die zulässigen Reihenfolgen der Antwortsignale, die dem Protokolltester bekannt sind. Antwortet nun das Mobilfunkgerät nicht mit einer dieser zulässigen Reihenfolgen, sondern antwortet es beispielsweise mit D-C-A-B, so ist dies ein Fehler des Mobilfunkgeräts. Diesen Fehler protokolliert der Protokolltester vorzugsweise in der laufenden Simulation.

Abweichungen kann es auch im Timing geben. Während beispielsweise ein Mobilfunkgerät X auf eine empfangene Signalsequenz erst nach der Zeit Tx mit einem Antwortsignal reagiert, antwortet ein anderes Mobilfunkgerät Y erst nach der Zeit Ty. Diese Antwortzeit T kann nach dem Mobilfunkstandard verschieden sein. Zulässig ist z. B. ein Zeitbereich [T1...T2] mit einer minimalen Antwortzeit T1 und einer maximalen Antwortzeit T2, in der das Mobilfunkgerät auf bestimmte Sendesignale reagieren muss. Liegt die Antwortzeit außerhalb des Bereichs, so wird ein Fehler protokolliert und der Test beendet.

Eine weitere Abweichung kann der Nachrichteninhalt selbst sein. Wenn beispielsweise, die Nachricht vom Mobilfunkgerät an die Basisstation gesendet wird, dass zuletzt x Fehler in der Kommunikation aufgetreten sind, so kann diese Anzahl im toleranten Modus von der im erwarteten Antwortsignal angegebenen Fehlerzahl abweichen. Der Mobilfunkstandard lässt auf bestimmte gesendete Signalsequenzen abweichende Nachrichteninhalte zu, etwa ein Bereich von [x1...x2]. Es ist also zulässig, dass die Nachricht minimal "x1 Fehler" und maximal "x2 Fehler" aufweisen kann. Liegt die Anzahl der Fehler außerhalb dieses Bereichs, wird ein Fehler protokolliert.

In einem dritten Schritt simuliert eine Testvorrichtung das Mobilfunknetz und sendet Signale an das Mobilfunkgerät. In einem vierten Schritt des Verfahrens empfängt der Protokolltester die Antwortsignale des Mobilfunkgeräts. Im fünften Schritt überprüft der Protokolltester, ob die empfangenen Antwortsignale mit den erwarteten Antwortsignalen übereinstimmen. Wenn sie übereinstimmen, fragt der Protokolltester ab, ob die Befehlsfolge abgearbeitet ist, dann wird der Test beendet. Wenn sie nicht übereinstimmen, wird vom Protokolltester überprüft, ob der zweite strenge Modus eingestellt wurde. Wenn ja, wird im achten Schritt der Test beendet und von einer Ausgabevorrichtung, vorzugsweise einem Softwareprogramm, wird das Testprotokoll ausgegeben.

Wenn hingegen der tolerante Modus aktiv ist, wird im sechsten Schritt des Verfahrens geprüft, ob die vorhandene Abweichung zulässig ist. Wenn nein, wird der Fehler von dem Protokolltester mitprotokolliert. Alternativ kann auch protokolliert werden, wenn eine zulässige Abweichung von erwarteten Antwortsignalen aufgetreten ist. Wenn ja, wird abgefragt, in Abfrage 10, ob die Befehlsfolge abgearbeitet ist. Wenn ja, ist der Test zu Ende, und das Testprotokoll wird ausgegeben. Ansonsten wird der Test mit dem Verarbeiten der nächsten Befehlszeile im Schritt 3 fortgesetzt.

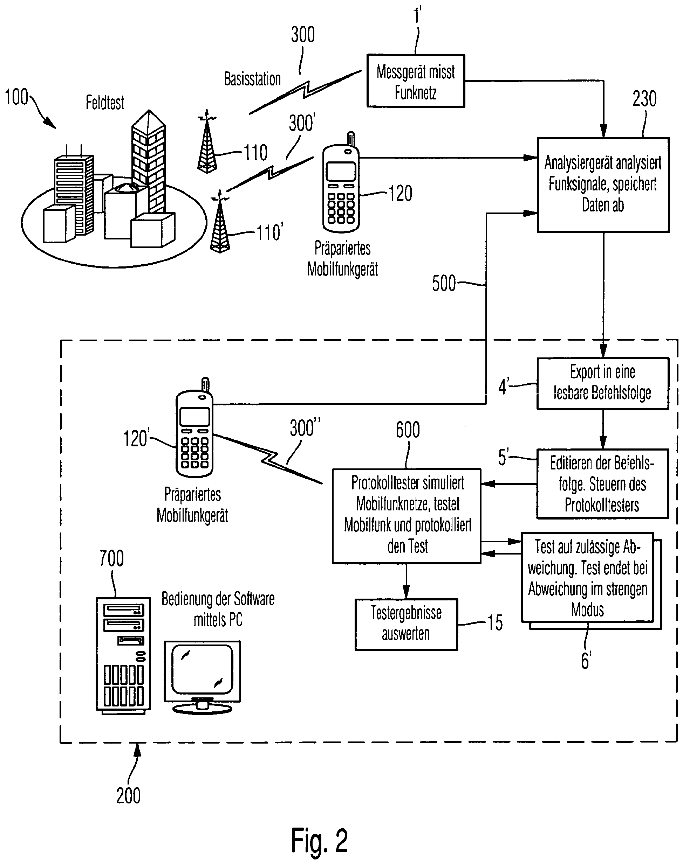

In Figur 2 ist in anschaulicher Form der gesamte Mobilfunktest in seinem wesentlichen Ablauf in Form von Funktionsblöcken dargestellt. Das darin angewendete erfindungsgemäße Verfahren ist in der Figur 2 als Block 6' weiß hervorgehoben. In einem Feldtest in realer Umgebung befinden sich mehrere Basisstationen 110 eines oder mehrerer Mobilfunknetze. Ein präpariertes Mobilfunkgerät 120 sendet Antwortsignale auf im Downlink empfangene Signale von einer der Basisstationen 110. Diesen zur Informationsübertragung zwischen dem Mobilfunkgerät 120 und einer Basisstation ausgetauschten Funksignalen überlagert sind Signale der übrigen Basisstationen, z.B. benachbarter Zellen.

Die Signale dieser Basisstationen 110 und die Antwortsignale, die das Mobilfunkgerät 120 sendet, werden von einer Messvorrichtung 1', z.B. einem Netzwerkscanner und dem präparierten Mobilfunkgerät 120 gemessen und aufgezeichnet. Das präparierte Mobilfunkgerät 120 gibt seine gesendeten und empfangenen Antwortsignale und Signale hierzu an eine Analysevorrichtung 230 weiter. Ebenso gibt die Messvorrichtung 1' die von ihr empfangenen Signale an die Analysevorrichtung 230 weiter. Die Analysiervorrichtung 230 analysiert die Signale der Funkverbindungen 300 und 300' und speichert die daraus gewonnenen Daten ab. Dabei kann im Gegensatz zu dem präparierten Mobilfunkgerät 120 das Messgerät auch Informationen über solche Mobilfunknetze ermitteln, in denen über das Mobilfunkgerät 120 keine Informationen verfügbar sind.

In dem beschriebenen Beispiel wird von der Aufzeichnung einer realen Netzumgebung ausgegangen. Ebensogut kann jedoch auch ein Labor-Interoperabilitätstest oder eine anderweitig geschaffene künstliche Netzumgebung die Basis für eine Erzeugung einer Befehlsfolge sein.

Diese Daten werden von der Analysevorrichtung 4' exportiert, in eine lesbare Befehlsfolge sowie erwartete Antwortsignale umgewandelt und in einem für des Protokolltester ausführbaren Format abgespeichert. Eine Software 5' erlaubt das Editieren der Befehlsfolge und das Konfigurieren der Software, ob in der Befehlsfolge im strengen und /oder im toleranten Modus das zu testende Mobilfunkgerät 120' getestet werden soll. Mit der so erhaltenen Befehlsfolge wird der Protokolltester 600 angesteuert. Dabei muss die Befehlsfolge nicht ausschließlich vom Analysiergerät stammen, sondern kann selbst programmiert werden, indem beispielsweise weitere Befehle ergänzt werden. Der Protokolltester 600 führt die Befehle aus und reproduziert damit die Sendesignale des Downlinks zumindest einer Basisstation eines Mobilfunknetzes. Das zu testende Mobilfunkgerät 120' kann von dem im Feldtest verwendeten Mobilfunkgerät 120 abweichen. Der Protokolltester 600 sendet die Signale an das Mobilfunkgerät 120'. Das Mobilfunkgerät 120' reagiert mit Antwortsignalen. Im erfindungsgemäßen Verfahren, siehe in der Figur 2 den Block 6', wird nun überprüft, ob das Mobilfunkgerät 120' die erwarteten Antwortsignale sendet. Dabei können im ersten, toleranten Modus die Antwortsignale des Mobilfunkgeräts von den erwarteten Antwortsignalen abweichen. Erwartete Antwortsignale sind solche Antwortsignale, die sich aus dem protokollierten Verhalten des präparierten Mobilfunkgeräts ergeben. Diese werden zeitrichtig beim Protokollieren der Funkverbindung in die Befehlsfolge eingefügt. Beim Abspielen der Befehlsfolge wartet der Tester auf das Eintreffen der erwarteten Signale, bevor die Befehlsfolge weiter abgearbeitet wird. Es gibt nach dem Mobilfunkstandard zulässige Abweichungen und unzulässige Abweichungen von den erwarteten Signalen. Im toleranten Modus protokolliert der Protokolltester unzulässige Abweichungen als Fehler und beendet den Test.

Bei zulässigen Abweichungen wird der Test fortgeführt bis das Ende der Befehlsfolge erreicht ist. Danach gibt der Protokolltester 600 das Testprotokoll auf einer Ausgabevorrichtung aus, wonach z. B. eine Software 15 das Testprotokoll auswertet. Im strengen Modus hingegen wird bei der ersten Abweichung von dem erwarteten Antwortsignal der Test sofort beendet.

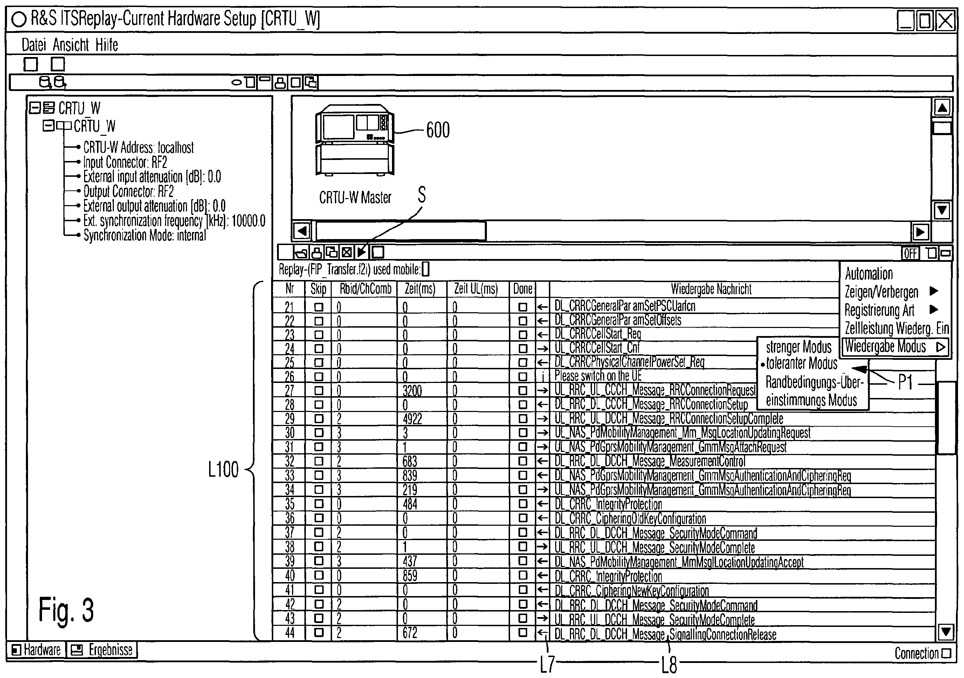

In Figur 3 präsentiert sich die Benutzeroberfläche des Programms, mit der man Befehlsfolgen zur Ansteuerung des Protokolltesters 600 editieren und programmieren kann. Mit der Software können Befehlsfolgen und erwartete Antwortsignale in die Liste L100 geladen und editiert werden. Die Befehlfolge stammt aus einem Export von Messdaten in einem Format, welches der Protokolltester 600 lesen und ausführen kann, wobei die einzelnen Befehle in dieser Benutzeroberfläche auch programmiert werden und damit editiert werden können. In der Liste L100 wird pro Zeile ein Befehl der Befehlsfolge aufgelistet. Neben den ausführbaren Befehlen enthält die Liste auch die Informationen bezüglich der erwarteten Antwortsignale in Form von Uplink-Nachrichten. Für das erfindungsgemäße Verfahren bedeutsam sind vor allem die Spalten L7 und L8. Die Spalte L7 zeigt mit Pfeilsymbolen an, ob es sich um eine Uplink-Nachricht oder einen Downlink-Befehl handelt: Für einen Uplink-Befehl erscheint das Grafiksymbol "Pfeil nach rechts" und bei einem Downlink-Befehl erscheint das Grafiksymbol "Pfeil nach links". Dabei ist zu beachten, dass lediglich die Downlink-Befehle tatsächlich ausgeführt werden. Die Uplink-Nachrichten entsprechen vielmehr die erwarteten Antwortsignale des zu testenden Mobilfunkgeräts.

Die Spalte L8 letztlich zeigt die Befehle selbst an, welche editierbar sind. Es können Befehle gelöscht, geändert, hinzugefügt und verschoben werden. Es ist auch möglich, aus einer aufgelisteten Befehlsfolge einschließlich der erwarteten Antwortsignale einen Teil herauszuschneiden und nur diese ausgeschnittene Befehlfolge über den Startknopf S zu starten.

Für jeden einzelnen Uplink ist über ein Popup-Menü P1 einstellbar, ob dieser Uplink im toleranten Modus oder im strengen Modus getestet werden soll. Das Editieren kann auch mittels eines separaten Programms erfolgen, welches bei Auswahl des zu ändernden Befehls aufgerufen wird.

Das erfindungsgemäße Verfahren ist nicht auf das dargestellte Ausführungsbeispiel beschränkt. Insbesondere sind auch einzelne Kombinationen von Merkmalen in vorteilhafter Weise möglich. Ferner wird darauf hingewiesen, dass die erläuterten Schemata der Fig. 1-7 lediglich der Illustration dienen.

## Patentansprüche

1. Verfahren zum Testen eines Mobilfunkgeräts mit folgenden Verfahrensschritten:
Erzeugen einer Befehlsfolge zur Ansteuerung einer Testvorrichtung und Erzeugen erwarteter Antwortsignale (1),
wobei durch einen Signalgenerator der Testvorrichtung Signalisierungsnachrichten erzeugt und gesendet werden, die einen Verbindungsaufbau zu dem zu testenden Mobilfunkgerät ermöglichen,
Simulieren eines realen Mobilfunknetzes (3) durch Ausführen der Befehlsfolge zur Ansteuerung der Testvorrichtung und Senden von Signalen an das Mobilfunkgerät,
Empfangen von Uplink-Nachrichten mittels Antwortsignalen (4) des Mobilfunkgerätes,
Überprüfen der Uplink-Nachrichten der Antwortsignale (5) auf Übereinstimmung mit erwarteten Uplink-Nachrichten erwarteter Antwortsignale, und Feststellen einer Abweichung der Antwortsignale von den erwarteten Antwortsignalen, und das Verfahren ist
**dadurch gekennzeichnet,**
**dass** ein erster oder ein zweiter Toleranzmodus ausgewählt wird (2);
**dass** bei festgestellter Abweichung in dem ersten, toleranten Toleranzmodus überprüft wird, ob die Abweichung eine zulässige Abweichung in Bezug auf einen benutzten Mobilfunkstandard ist (6) und Weiterführen des Tests, wenn diefestgestellte Abweichung zulässig ist, und
**dass** bei festgestellter Abweichung in dem zweiten, strengen Toleranzmodus der Test beendet wird(8),
wobei die zulässige Abweichung eine Abweichung des Antwortsignals ist, für die eine Basisstation die Uplink-Nachrichten der Antwortsignale richtig in Bezug auf den Mobilfunkstandard interpretieren kann

2. Verfahren nach Anspruch 1,
**dadurch gekennzeichnet,**
**dass** bei festgestellter Abweichung der Antwortsignale von den erwarteten Antwortsignalen die Abweichung protokolliert wird.

3. Verfahren nach Anspruch 1 oder 2,
**dadurch gekennzeichnet,**
**dass** bei Feststellen einer nicht zulässigen Abweichung der Antwortsignale im ersten, toleranten Toleranzmodus der Test beendet wird und die nicht zulässige Abweichung protokolliert wird, wobei die nicht zulässige Abweichung eine Abweichung des Antwortsignals ist, für die die Basisstation die Uplink-Nachrichten des Antwortsignals nicht in Bezug auf den Mobilfunkstandard interpretieren kann.

4. Verfahren nach einem der Ansprüche 1 bis 3,
**dadurch gekennzeichnet,**
**dass** Informationen über zumindest ein reales Mobilfunknetz (100) und ein Mobilfunkgerät (120) mittels einer Messvorrichtung aufgezeichnet werden und diese Informationen in eine Befehlsfolge umgewandelt werden zur Erstellung eines Testszenarios.

5. Verfahren nach einem der Ansprüche 1 bis 3,
**dadurch gekennzeichnet,**
**dass** die gegebene Befehlsfolge zur Erstellung eines Testszenarios programmiert ist.

6. Verfahren nach einem der Ansprüche 1 bis 5,
**dadurch gekennzeichnet,**
**dass** zulässige Abweichungen im toleranten Modus durch Parameterbereiche definiert sind.

7. Verfahren nach einem der Ansprüche 1 bis 3
**dadurch gekennzeichnet,**
**dass** zulässige Abweichungen im toleranten Modus auf Basis eines Mobilfunkstandards durch bestimmte Nachrichteninhalte definiert sind.

8. Verfahren nach Anspruch 6,
**dadurch gekennzeichnet,**
**dass** die Parameterbereiche Zeitintervalle sind, die durch eine minimale Antwortzeit und eine maximale Antwortzeit definiert sind, nach der das Mobilfunkgerät auf eine Signalisierungsnachricht einer oder mehrerer Basisstationen reagiert.

9. Verfahren nach Anspruch 6
**dadurch gekennzeichnet,**
**dass** die Parameterbereiche gegeben sind durch eine Menge von gemäß des Mobilfunkstandards gültigen Reihenfolgen von Antwortsignalen des Mobilfunkgeräts.

## Claims

1. Method for testing a mobile radio device with the following method steps:
generation of a sequence of commands for actuation of a testing device and generation of expected response signals (1),
wherein a signal generator of the testing device generates and transmits signalling messages which allow the production of a connection to the mobile radio device to be tested,
simulation of an actual mobile radio network (3) by executing the sequence of commands for actuation of the testing device and transmission of signals to the mobile radio device,
reception of uplink messages by means of response signals (4) of the mobile radio device,
checking of the uplink messages of the response signals (5) for matching with expected uplink messages of expected response signals, and identification of a deviation of the response signals from the expected response signals,
which method is **characterised in that**
a first or a second tolerance mode is selected (2);
**in that** on identification of a deviation a check is carried out in the first tolerant tolerance mode to determine whether the deviation is a permissible deviation with respect to a mobile radio standard being used (6) and the test is continued when the identified deviation is permissible, and
**in that** on identification of a deviation the test (8) is ended in the second strict tolerance mode,
the permissible deviation being a deviation of the response signal for which a base station can interpret the uplink messages of the response signals correctly with respect to the mobile radio standard.

2. Method according to claim 1,
**characterised in that**
on identification of a deviation of the response signals from the expected response signals the deviation is logged.

3. Method according to claim 1 or 2,
**characterised in that**
on identification of a deviation of the response signals which is not permissible in the first tolerant tolerance mode the test is ended and the deviation which is not permissible is logged, the deviation which is not permissible being a deviation of the response signal for which the base station is unable to interpret the uplink messages of the response signal with respect to the mobile radio standard.

4. Method according to one of claims 1 to 3,
**characterised in that**
information about at least one real mobile radio network (100) and a mobile radio device (120) is recorded by means of a measuring device and this information is converted into a sequence of commands to set up a test scenario.

5. Method according to one of claims 1 to 3,
**characterised in that**
the given sequence of commands is programmed to set up a test scenario.

6. Method according to one of claims 1 to 5,
**characterised in that**
permissible deviations in the tolerant mode are defined by parameter ranges.

7. Method according to one of claims 1 to 3,
**characterised in that**
permissible deviations in the tolerant mode are defined on the basis of a mobile radio standard by specific message contents.

8. Method according to claim 6,
**characterised in that**
the parameter ranges are intervals of time which are defined by a minimum response time and a maximum response time after which the mobile radio device reacts to a signalling message of one or more base stations.

9. Method according to claim 6,
**characterised in that**
the parameter ranges are given by a quantity of sequences of response signals of the mobile radio device which are valid according to the mobile radio standard.

## Revendications

1. Procédé pour tester un appareil de téléphonie mobile, comprenant les étapes de procédé suivantes :
production d'une suite d'instructions pour la commande d'un dispositif de test et production de signaux de réponse attendus (1),
un générateur de signaux du dispositif de test produisant et émettant des informations de signalisation, qui permettent l'établissement d'une liaison avec l'appareil de téléphonie mobile à tester,
simulation d'un réseau de téléphonie mobile réel (3) par exécution de la suite d'instructions pour la commande du dispositif de test et émission de signaux à l'appareil de téléphonie mobile,
réception d'informations de liaison montante ou informations uplink au moyen de signaux de réponse (4) de l'appareil de téléphonie mobile,
vérification des informations de liaison montante des signaux de réponse (5) quant à leur coïncidence avec des informations de liaison montante attendues de signaux de réponse attendus, et constatation d'un écart des signaux de réponse par rapport aux signaux de réponse attendus, le procédé étant
**caractérisé**
**en ce que** l'on sélectionne un premier ou un deuxième mode de tolérance (2) ;
**en ce que** dans le cas d'un écart constaté dans le premier mode de tolérance, tolérant, on vérifie si l'écart est un écart admissible relativement à un standard de téléphonie mobile utilisé (6), et poursuite du test lorsque l'écart constaté est admissible, et
**en ce que** dans le cas d'un écart constaté dans le deuxième mode de tolérance, strict, le test est arrêté (8),
l'écart admissible étant un écart du signal de réponse, pour lequel une station de base peut interpréter de manière correcte les informations de liaison montante des signaux de réponse, relativement au standard de téléphonie mobile considéré.

2. Procédé selon la revendication 1,
**caractérisé**
**en ce que** dans le cas d'un écart constaté des signaux de réponse par rapport aux signaux de réponse attendus, l'écart est consigné.

3. Procédé selon la revendication 1 ou la revendication 2,
**caractérisé**
**en ce que** dans le cas de la constatation d'un écart non admissible des signaux de réponse dans le premier mode de tolérance, tolérant, le test est arrêté et l'écart non admissible est consigné, l'écart non admissible étant un écart du signal de réponse, pour lequel une station de base ne peut pas interpréter les informations de liaison montante, relativement au standard de téléphonie mobile considéré.

4. Procédé selon l'une des revendications 1 à 3,
**caractérisé**
**en ce que** des informations relatives à au moins un réseau de téléphonie mobile réel (100) et à un appareil de téléphonie mobile (120) sont enregistrées au moyen d'un dispositif de mesure, et ces informations sont converties en une suite d'instructions pour établir un scénario de test.

5. Procédé selon l'une des revendications 1 à 3,
**caractérisé**
**en ce que** la suite d'instructions donnée est programmée pour l'établissement d'un scénario de test.

6. Procédé selon l'une des revendications 1 à 5,
**caractérisé**
**en ce que** des écarts admissibles dans le mode tolérant, sont définis par des plages de paramètres.

7. Procédé selon l'une des revendications 1 à 3,
**caractérisé**
**en ce que** des écarts admissibles dans le mode tolérant sont définis sur la base d'un standard de téléphonie mobile, par des contenus d'informations déterminés.

8. Procédé selon la revendication 6,
**caractérisé**
**en ce que** les plages de paramètres sont des intervalles de temps, qui sont définis par un temps de réponse minimal et un temps de réponse maximal, après lesquels l'appareil de téléphonie mobile réagit à une information de signalisation d'une ou de plusieurs stations de base.

9. Procédé selon la revendication 6,
**caractérisé**
**en ce que** les plages de paramètres sont données par un ensemble de suites de signaux de réponse de l'appareil de téléphonie mobile, qui sont valables conformément au standard de téléphonie mobile considéré.
